Europäisches Patentamt

(19) European Patent Office

Office européen des brevets

(11) Publication number : **0 460 920 A1**

(12) **EUROPEAN PATENT APPLICATION**

(21) Application number : 91305051.4

(22) Date of filing : 04.06.91

(51) Int. Cl.⁵ : **B25B 23/14, G01L 5/24**

(30) Priority : 06.06.90 US 534104

(43) Date of publication of application :
11.12.91 Bulletin 91/50

(84) Designated Contracting States :
BE CH DE ES FR GB LI SE

(71) Applicant : THE BABCOCK & WILCOX
COMPANY
1010 Common Street, P.O. Box 60035
New Orleans, Louisiana 70160 (US)

(72) Inventor : Carpenter, Michael S.
117 Declaration Terrace
Forest, VA 24551 (US)

(74) Representative : Purvis, William Michael
Cameron et al
D. Young & Co. 10 Staple Inn
London WC1V 7RD (GB)

(54) Ultrasonic transducer socket assembly.

(57) An ultrasonic transducer socket assembly (10) simultaneously to tighten a bolt (18) and to measuring bolt load has a pole adaptor rigidly attached to a driving socket (16) to be used to engage and drive a bolt, the pole adaptor (20) having a stationary cylinder (38) mounted therein. A second cylinder (40) is rotatably and slidably received in the stationary cylinder (38) and has an ultrasonic transducer (36) pivotally mounted at one end that contacts the bolt (18) to be tightened when the socket (16) is engaged with the bolt (18). The rotating cylinder (40) and the transducer (36) are rotated approximately 180 degrees during engagement of the socket (16) with the bolt (18) to smear an even couplant layer between the bolt (18) and the transducer (36) to ensure consistent measurements of bolt load during tightening.

EP 0 460 920 A1

FIG.1

The invention relates to an ultrasonic transducer socket assembly.

Such an assembly can be used remotely to monitor bolt load during and after torquing of a bolt.

In many situations, it is necessary to determine bolt load during assembly operations to ensure that parts are joined together within the stress limits for the intended use. In applications where the bolt load is critical, the use of a torque wrench is generally unacceptable due to varying amounts of friction between the bolt and nut, structure, or washer.

Previously proposed devices for indicating the load on a bolt or fastener include:

Patent Specification US-A-4,846,001 which discloses a piezoelectric sensor permanently coupled to the upper surface of a fastener, contacts electrically engageable with the sensor and an electronic measurement device responsive to electronic differential signals of the sensor to determine the tensile load of the fastener when stressed longitudinally.

Patent Specifications US-A-4,686,859 and US-A-4,676,109 which disclose a bolt modified to provide a load indicating fastener wherein a pin is positioned within an axial bore in the bolt so the head of the pin is coplanar with the bolt head. A load indicating device determines bolt load during installation by the use of a differential displacement measurement device to measure the height differential between the upper surfaces of the bolt head and the pin.

Patent Specification US-A-4,333,351 which discloses a method and apparatus for determining the residual tension in a bolt or stud in a joint assembly. A tensioner is used to pull the bolt or stud in a previously tightened joint and an ultrasonic extensometer is used to determine the residual force or tension in the bolt or stud.

Patent Specification US-A-4,709,182 which discloses the use of a vibrator/sensor unit to cause longitudinal oscillation of a bolt to its natural frequency to aid in loosening or tightening the connection to a predetermined value.

Patent Specification US-A-3,759,090 discloses an ultrasonic extensometer for measuring the elongation of a bolt tightened against a structure. A transducer magnetically coupled to the head of the bolt generates pulse signals into the bolt.

Although these previously proposed devices can measure bolt load, they are not capable of remotely torquing a bolt while simultaneously and consistently indicating the load on the bolt. Much of the proposed art also requires the use of a modified bolt to determine bolt load. This results in increased costs.

According to one aspect of the invention there is provided an ultrasonic transducer socket assembly simultaneously to tighten a bolt and remotely to measure bolt load, comprising:

    a. a pole adaptor having a longitudinal bore therethrough;

    b. a socket to engage and drive the bolt with the socket being rigidly attached to the pole adaptor and having a longitudinal bore therethrough; and

    c. contact means, including an ultrasonic transducer, mounted in the longitudinal bores of the socket and the pole adaptor to cause the transducer to contact the bolt to be tightened at a constant force in response to engagement of the socket with the bolt whereby the transducer is used to measure bolt load.

According to another aspect of the invention there is provided an ultrasonic transducer socket assembly simultaneously to tighten a bolt and to measure bolt load, comprising:

    a. a pole adaptor having a longitudinal bore therethrough;

    b. a socket to engage and drive the bolt with the socket being rigidly attached to the pole adaptor and having a longitudinal bore therethrough; and

    c. contact means, including an ultrasonic transducer, mounted in the longitudinal bores of the socket and the pole adaptor to cause the transducer to contact the bolt to be tightened at a constant force in response to engagement of the socket with the bolt whereby the transducer is used to measure bolt load and is pivotally mounted on the contact means.

According to a further aspect of the invention there is provided an ultrasonic transducer socket assembly simultaneously to tighten a bolt and to measure bolt load, comprising:

    a. a pole adaptor having a longitudinal bore therethrough;

    b. a socket to engage and drive the bolt with the socket being rigidly attached to the pole adaptor and having a longitudinal bore therethrough;

    c. a stationary cylinder mounted in the longitudinal bore of the pole adaptor;

    d. a rotating cylinder slidably and rotatably received within the stationary cylinder so as to be movable between a first normal extended position and a second retracted position; and

    e. an ultrasonic transducer mounted at one end of the rotating cylinder such that the transducer is in contact with the bolt to be tightened when the socket is engaged with the bolt.

Thus the invention can provide a socket assembly that incorporates an ultrasonic transducer/rotating gimbal assembly remotely to monitor bolt load while torquing. As the socket is lowered onto the bolt, the gimbal assembly forces the transducer to rotate and spread a uniform couplant layer between the transducer and the bolt. The assembly has a stationary section and a rotating section. The stationary section is mounted in the socket that engages the flats of the bolt head for torquing the bolt. The rotating section includes a pin that is slidably engaged in a helical slot in the stationary section, a transducer attached to the lower end of the rotating section by means of a gimbal and a drive pin between the rotating section and gimbal that transfers the rotating motion to the transducer. The rotating section is spring loaded in the stationary section to provide a constant downward force on the transducer. This ensures a uniform couplant layer between the bolt and the transducer and consistent ultrasonic measurements when determining bolt load.

The invention is diagrammatically illustrated by way of example in the accompanying drawings in which:

Figure 1 is a partial sectional view illustrating an ultrasonic transducer socket assembly according to the invention at initial contact with the head of a bolt; and

Figure 2 is a partial sectional view illustrating the socket assembly of Figure 1 fully engaged on the bolt head.

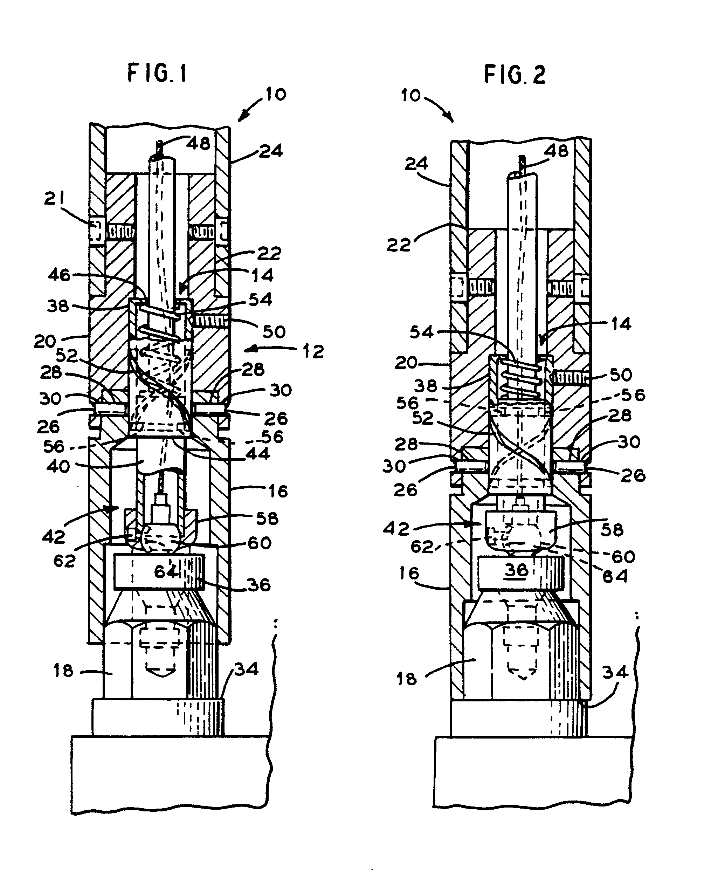

Referring to Figure 1 and 2, an ultrasonic transducer socket assembly 10 generally comprises a bolt engaging section 12 and contact means 14, including a transducer 36, to cause the transducer 36 to contact the head of a bolt to be tightened in response to engagement of the section 12 with the bolt head 18.

The bolt engaging section 12 includes a socket 16 to engage and drive a bolt (such as a six point socket sized to fit the bolt head 18 of the bolt to be installed) and a pole adaptor 20. The pole adaptor 20 is provided with an upper area 22 having a reduced outer diameter that is received within an extension pole 24. The pole adaptor 20 and the extension pole 24 are rigidly attached together at the upper area 22 by any suitable means such as screws or threaded pins 21. The extension pole 24, like the pole adaptor 20, has a longitudinal central bore therethrough and is used with the socket 16 for the remote torquing and de-torquing of bolts. The socket 16 is rigidly attached to the pole adaptor 20 by pins 26 that are received in radial bores 28, 30 respectively. The socket 16 is provided with an upper portion having a reduced outer diameter whereby it is received within the pole adaptor 20 such that the bores 28, 30 are in coaxial alignment to receive the pins 26. The pins 26 also serve to transfer rotational force to the socket 16 from the pole adaptor 20. Like the pole adaptor 20, the socket 16 is provided with a longitudinal bore therethrough.

The contact means 14, including the transducer 36, is mounted in the longitudinal bores of the socket 16 and the pole adaptor 20 to cause the transducer 36 to contact the bolt head 18 at a constant force in response to engagement of the socket 16 with the bolt head 18. The transducer 36 is used to measure bolt load during tightening thereof. The contact means 14 comprises a stationary cylinder 38, a rotating cylinder 40 and a gimbal assembly 42. The stationary cylinder 38 is a hollow cylinder having a first open end 44 and a second end 46 that is provided with an opening to allow the rotating cylinder 40 and a transducer cable 48 to pass therethrough. The stationary cylinder 38 is rigidly mounted in the longitudinal bore of the pole adaptor 20 by the use of set screws 50 so as to be coaxial with the pole adaptor 20. The stationary cylinder 38 is provided with a helical slot 52 to be explained below. The rotating cylinder 40 is slidably and rotatably received within the stationary cylinder 38. A spring 54 biases the rotating cylinder 40 outwardly of the stationary cylinder 38 towards the open end of the socket 16 and away from the pole adaptor 20 in its first normal extended position illustrated in Figure 1. Pins 56 provided on the cylinder 40 that extend radially outward therefrom are received in the helical slot 52. The pins 56 serve to prevent the cylinder 40 from being forced completely out of the stationary cylinder 38 by the spring 54. During initial engagement of the socket 16 with the bolt head 18, the transducer 36 contacts the bolt head 18 as shown in Figure 1. When the socket 16 is fully engaged with the bolt head 18 as shown in Figure 2, the rotating cylinder 40 is forced into a second retracted position inside the stationary cylinder 38 against the pressure of the spring 54. During this retraction the riding of the pins 56 in the helical slot 52 causes the rotating cylinder 40, the gimbal 42, and the transducer 36 to rotate approximately 180 degrees as the socket 16 is moved onto the bolt head 18. Enough longitudinal travel is provided between the stationary cylinder 38 and the rotating cylinder 40 to cause the socket 16 to hard stop on a shoulder 34 of the bolt head 18 before the rotating cylinder 40 runs out of travel in the stationary cylinder 38. This results in the transducer 36 having a constant bearing pressure against the bolt head 18 regardless of the pressure of the socket 16 on the shoulder 34 during torquing operations. The gimbal assembly 42 allows pivoting of the socket assembly 10 with the transducer 36 flat against the top of the bolt head 18 for accurate measurements. The gimbal assembly 42 is formed from a cap 58 and a ball 60. The cap 58 is rigidly attached to the rotating cylinder 40 and the ball 60 is rotatably mounted between the cap 58 and the rotating cylinder 40 to permit flat placement of the transducer 36 on the bolt head 18. The upper end of the transducer 36 extends through the ball 60. Rotation of the ball 60 and the transducer 36 in conjunction with the rotating cylinder 40 is accomplished by the use of a set screw 62 that is threaded through the cap 58 and rides in the slot 64 on the outside circumference of the ball 60. The set screw 62 transfers the rotational motion of the rotating cylinder 40 to the ball 60 during engagement of the socket 16 with the bolt head 18 while still allowing movement of the ball 60 within a different plane in the cap 58.

In operation, the extension pole 24 is used remotely to position the ultrasonic transducer socket assembly 10 and to cause the socket 16 to engage the bolt head 18. As the socket 16 is pushed onto the bolt head 18, the pins 56 cause the rotating cylinder 40 to rotate approximately 180 degrees as the transducer 36 contacts the bolt head 18 and the rotating cylinder 40 is forced against the presure of the spring 54 from a first normal extended position to its second retracted position inside the stationary cylinder 38. Causing rotation of the transducer 36 is important in applications where ultrasonic testing to determine bolt load is done in or out of water because a couplant is used between the bolt and transducer to ensure transmission of the ultrasonic signals between the bolt and the transducer. The rotation of the transducer smears the couplant on the bolt head in a uniform layer between the transducer and the bolt head. This ensures that measurements are consistent. The pressure of the transducer 36 is constant against the bolt head 18 throughout the torquing operation due to the spring 56. As the bolt is tightened, measurements of changes in bolt length by the use of the ultrasonic transducer 36 in a manner known in the industry are used simultaneously to determine bolt load. Signals between the transducer 36 and instrumentation not shown are transmitted through the transducer cable 48. It should be understood that the terms stationary and rotating with regard to the cylinders 38, 40 are used to indicate their relative movement to each other during engagement of the socket 16 onto the bolt head 18.

## Claims

1. An ultrasonic transducer socket assembly (10) simultaneously to tighten a bolt (18) and remotely to measure bolt load, comprising:
   a. a pole adaptor (20) having a longitudinal bore therethrough;
   b. a socket (16) to engage and drive the bolt (18) with the socket (16) being rigidly attached to the pole adaptor (20) and having a longitudinal bore therethrough; and
   c. contact means (38, 40), including an ultrasonic transducer (36), mounted in the longitudinal bores of the socket (16) and the pole adaptor (20) to cause the transducer (36) to contact the bolt (18) to be tightened at a constant force in response to engagement of the socket (16) with the bolt (18) whereby the transducer (36) is used to measure bolt load.

2. An assembly according to claim 1, wherein the contact means causes the transducer to rotate approximately 180 degrees during engagement of the socket with the bolt.

3. An assembly according to claim 1, wherein the contact means comprises:
   a. a stationary cylinder (38) mounted in the longitudinal bore of the pole adaptor (20); and
   b. a rotating cylinder (40) slidably and rotatably received within the stationary cylinder (38) and having the transducer (36) mounted at one end thereof.

4. An assembly according to claim 3, wherein the transducer is pivotally mounted on the rotating cylinder (40).

5. An assembly according to claim 3, further comprising means (54) in the stationary cylinder (38) to bias the rotating cylinder (40) outwardly of the stationary cylinder (38) whereby the rotating cylinder (40) is movable between a first normal extended position and a second retracted position.

6. An ultrasonic transducer socket assembly (10) simultaneously to tighten a bolt (18) and to measure bolt load, comprising:
   a. a pole adaptor (20) having a longitudinal bore therethrough;
   b. a socket (16) to engage and drive the bolt (18) with the socket being rigidly attached to the pole adaptor (20) and having a longitudinal bore therethrough; and
   c. contact means (38, 40), including an ultrasonic transducer (36), mounted in the longitudinal bores of the socket (16) and the pole adaptor (20) to cause the transducer (36) to contact the bolt (18) to be tightened at a constant force in response to engagement of the socket (16) with the bolt (18) whereby the transducer (36) is used to measure bolt load and is pivotally mounted on the contact means (38, 40).

7. An assembly according to claim 6, wherein the contact means causes the transducer (36) to rotate approximately 180 degrees during engagement of the socket (16) with the bolt (18).

8. An assembly according to claim 6, wherein the contact means comprises:
   a. a stationary cylinder (38) mounted in the longitudinal bore of the pole adaptor (20); and
   b. a rotating cylinder (40) slidably and rotatably received within the stationary cylinder (38), and having the transducer (36) mounted at one end thereof.

9. An assembly according to claim 8, further comprising means (54) in the stationary cylinder to bias the rotating cylinder (40) outwardly of the stationary cylinder (38) whereby the rotating cylinder (40) is movable between a first normal extended position and a second retracted position.

10. An ultrasonic transducer socket assembly (10) simultaneously to tighten a bolt (18) and to measure bolt load, comprising:

a. a pole adaptor (20) having a longitudinal bore therethrough;

b. a socket (16) to engage and drive the bolt (18) with the socket (16) being rigidly attached to the pole adaptor (20) and having a longitudinal bore therethrough;

c. a stationary cylinder (38) mounted in the longitudinal bore of the pole adaptor (20);

d. a rotating cylinder (40) slidably and rotatably received within the stationary cylinder (38) so as to be movable between a first normal extended position and a second retracted position; and

e. an ultrasonic transducer (36) mounted at one end of the rotating cylinder (40) such that the transducer (36) is in contact with the bolt (18) to be tightened when the socket (16) is engaged with the bolt (18).

11. An assembly according to claim 10, wherein the rotating cylinder is caused to rotate approximately 180 degrees during engagement of the socket (16) with the bolt (18).

12. An assembly according to claim 10, wherein the transducer (36) is pivotally mounted on the rotating cylinder.

13. An assembly of claim 10, further comprising a spring (54) in the stationary cylinder (38) to bias the rotating cylinder (40) to its first normal extended position.

FIG. 1

FIG. 2

**European Patent Office**

# EUROPEAN SEARCH REPORT

Application Number

EP    91 30 5051

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 969 810 (PAGANO) | 1,6 | B25B23/14 |
| A | * the whole document * | 4,10,12 | G01L5/24 |
| | --- | | |
| A | FR-A-2 550 982 (CENTRE TECHNIQUE DES INDUSTRIES MECANIQUES) * page 1 - page 3 * | 4,12 | |
| | --- | | |
| A | FR-A-2 542 869 (CENTRE TECHNIQUE DES INDUSTRIES MECANIQUES) | | |
| | ----- | | |

TECHNICAL FIELDS SEARCHED (Int. Cl.5)

B25B
G01L
B23P
G01B

The present search report has been drawn up for all claims

| Place of search | Date of completion of the search | Examiner |
|---|---|---|
| THE HAGUE | 28 AUGUST 1991 | RIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P0401)